# EUROPÄISCHE PATENTANMELDUNG

(11) **EP 0 639 416 A1**
(43) Veröffentlichungstag der Anmeldung: **22.02.1995**
(21) Anmeldenummer: 93113128.8
(22) Anmeldetag: 17.08.1993
(51) Int. Cl.: B22D 11/126, B23K 7/10, B23K 37/00

(54) **Stranggiessmaschine mit leichter und robuster Strangbrennschneidmaschine**

(71) Anmelder: HORST K. LOTZ Feuerschutzbaustoffe, D-65719 Hofheim (DE)
(72) Erfinder: Lotz, Horst K., D-65719 Hofheim-Wallau (DE); Lotz, Mattias, D-65719 Hofheim (DE)

(57) **Zusammenfassung**

In einer Stranggießanlage für kleinere Querschnitte laufen neuartige, leichte Strangbrennschneidmaschinen (1) auf offenen, wasserdurchflossenen Laufbahnen (4). Diese sind auch durch die Abtrennung von Antrieben und Gasversorgungseinrichtungen in notwendig und vorteilhaft mitlaufende und in ortsfest angeordnete Anteile wesentlich vorteilhafter bezüglich Herstellungs-, Wartungs- und Betriebskosten.

## Beschreibung

Zum für den weiteren Betriebsablauf erforderlichen Unterteilen nahezu endlos gegossener, waagerecht austretender Stränge aus Stahl-Stranggießanlagen für Knüppel, Blöcke und kleine Brammen, werden neben schweren, teueren und noch anders benachteiligten mechanischen Scheren vor allem Sauerstoff- Brennschneidmaschinen als Trenneinrichtungen eingesetzt.

Durch die bei der Stahlerzeugung eingesetzten großen, wuchtigen Maschinen, Einrichtungen und ihre rauhe Arbeitsumgebung beeinflußt, werden die Strangbrennschneidmaschinen entsprechend schwer und groß gebaut. Und das, obwohl im Gegensatz zu Scheren oder Sägen beim Sauerstoffbrennschneiden keine beachtenswerten Verfahrenskräfte auftreten. Der Schneidbrenner selbst, der mit Schneidgeschwindigkeit quer über den Strang, mit Gießgeschwindigkeit mit dem Strang und nach dem Schneiden mit einer von der gewünschten Stücklänge her gewünschten im Bereich um die 20-30 m/min liegende Verfahrgeschwindigkeit zurückgefahren wird, wiegt etwa 10 kg. Selbst zwei solcher an einer Brennschneidmaschine zum Gegeneinanderschwenken eingesetzte Schneidbrenner rechtfertigen mit Eigengewicht, Biegekräften von Versorgungsschläuchen, Beschleunigung und Verfahrenskräfte (Rückstoß) keinen Aufwand wie heute üblich.

Bisher hatte die Forderung nach Leistungserhöhung, Vielseitigkeit, Personaleinsparung und Automatisierung diese Art von an sich leichter Trenneinrichtung zu schweren, umfangreichen und komplizierten, also auch aufwendigen, störanfälligen und sehr wartungsbedürftigen Maschinen hin entwickelt.

Die wesentlichen Betriebsweisen und bisherigen Ausführungen solcher Trenneinrichtungen als Teil einer Stranggießanlage werden nachstehend kurz beschrieben, um die Ausführungen und Vorteile der Erfindung danach einfacher zu erkennen.

Üblicherweise wird der pendelartig oder gerade über den Strang geführte Schneidbrenner an einer Maschine gehalten und bewegt, deren Gehäuse rund oder eckig ganz oder teilweise doppelwandig aus Blechen möglicherweise verstärkt mit leichten Walzprofilen zusammengeschweißt und von Kühlwasser durchflossen sind. Auch werden einfache Maschinengehäuse eingesetzt, deren Wärmeschutz mit eigenständigen am Gehäuse angebrachten, vorwiegend von Kühlwasser durchflossenen Wärmeschutzplatten bewirkt wird. An dieser Maschine befindet sich eine herkömmliche Anklemmung aus zwei zangenartig angeordneten Hebeln mit einem Preßluftzylinder zum Öffnen und Schließen = Anklemmen an den mit Gießgeschwindigkeit unter der Maschine durchlaufenden Strang. Erlaubt der Querschnitt des Stranges eine höhere Belastung, dann wird die Trenneinrichtung bekanntermaßen mit einem pneumatisch auf den Strang gedrückten Aufklemmhebel über Reibung in Gleichlauf auf den Strang gebracht, d.h. synchronisiert. Während dieses, im richtigen Augenblick zur Erzielung einer bestimmten Stücklänge, bewirkten Gleichlaufes wird mit dem Schneidbrenner die Trennung durchgeführt.

Beim Gleichlauf und beim danach notwendigen Rücklauf fährt die Trenneinrichtung mit 3 oder 4 Laufrädern an aus der Maschine herausragenden Achsen oder Wellen, angetrieben von einem aus Elektromotor mit Getriebe und Bremse bestehenden Fahrantrieb im Maschinengehäuse. Für besondere Fälle läßt sich die Trenneinrichtung damit auch in Stranglaufrichtung ohne Anklemmung fahren.

Die Laufräder rollen auf üblichen Schienen, die bei heißer Betriebsumgebung auf wasserdurchflossenen Hohlprofilträgern gelagert sind. In einigen Fällen werden die Hohlprofilträger direkt auch als Laufschienen verwendet, wegen der dafür geringen Querschnittsgröße wird ein statisch ergänzender zweiter Träger zugeordnet.

Für die Versorgung und Steuerung der Trenneinrichtung, d.h. für Schneidbrenner, Schneidantrieb, Anklemmung, Verfahrantrieb und Steuerelemente sind vorwiegend Schläuche und Kabel hoch über der Trenneinrichtung beweglich aufgehängt oder werden in besonderen Schlauch- und Kabelwagen oder in Leitungsraupen an besonderen Schienen oder Wannen geführt.

Es ist auch eine Bauart von Trenneinrichtungen bekannt, die mit gekühlten oder nicht gekühlten Rohren als Laufbahnen ausgestattet ist, die von ringförmigen Hülsen umschlossen sind und die verschiebbar die Trenneinrichtung mit allen anderen notwendigen Wirkteilen tragen.

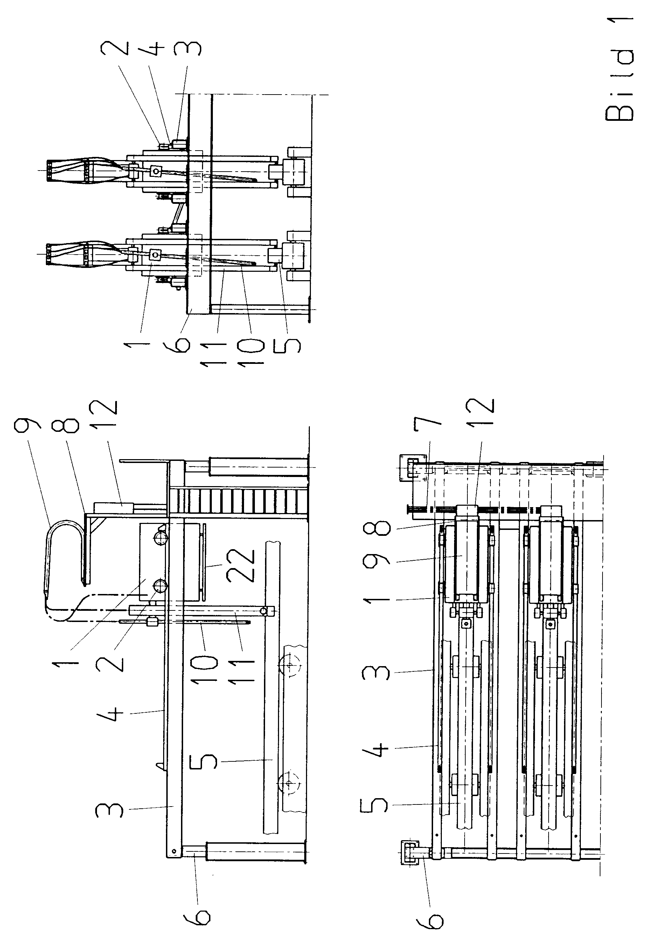

Üblich sind beispielsweise nach Bild 1 Strangbrennschneidmaschinen 1, die in Portalausführung aus schweren Trägerprofilen oder aus geschweißten Kastenprofilen bzw. Rohrprofilen bestehen, und die dann meist auch zum Teil von Kühlwasser durchflossen sind. Entsprechend schwere Lauf- und Führungsräder 2 mit Rollen oder Kugellagern laufen auf Kühlwasser durchflossenen Laufschienenträger 3 oder auf entsprechenden Laufschienen 4 die auf solchen Laufschienenträgern 3 angebracht sind. Entweder handelt es sich um schwere Hohlprofile als Laufschienenauflage 3 oder um Gitterwerke aus kleineren Hohlprofilen, jedoch sind beide Arten von Kühlwasser durchflossen. Das gilt auch für die quer zu den Strängen 5 brückenartig verlaufenden Portalträger 6, auf denen die Laufschienenauflagen 3 an ihren Enden ruhen, und auf denen auch die Versorgungsleitung 7 zu jeder Brennschneidmaschine 1 hinlaufen, die dann dort beweglich von einem höheren Mast lose oder vielleicht noch mit einem Ausleger 8 zur Maschine hin in einer Leitungsraupe 9 geführt sind. Nicht vom Wasser als Hohlprofil direkt gekühlte, tragende Teile wie Portalträger 6 des Gerüstes, Ausleger 8 und Laufschienen 4 sind oft von besonderen wasserdurchflossenen Blechen, wie auch die Brennschneidmaschinen selbst, oder von stark isolierenden Wärmeschutzplatten 22, geschützt.

Auch sind die Brennschneidmaschinen 1 mit allen Antrieben und Einrichtungen inklusive elektronischer Stellungsgeber für den Schneidbrenner 10, die Anklemmung 11 und das Verfahren ausgestattet, nicht jedoch mit Absperr- und Einstelleinrichtungen für die Gase der Schneidbrenner 10, die zusammen mit den Druckminderern als Gassteuerstation 12 ortsfest auf oder an den Portalträgern angeordnet sind.

Der nachstehend beschriebenen Erfindung liegt die Aufgabe zugrunde, eine physisch leichtere, kostengünstiger herstellbare, leichter zu wartende (z. B. durch bessere Zugänglichkeit), einfacher zu bedienende und Betriebsmittel sparende Brennschneidanlage für eine moderne Stranggießanlage zu finden.

Erfindungsgemäß wurden durch die gemeinsame Verwendung an sich in diesem Arbeitsbereich unüblicher Ausführungen und Bauteile obige Aufgabe gelöst, und zwar:
- durch die Verwendung offener, wasserdurchflossener Trägerprofile, sonst aus Verschmutzungsgründen in Stahlwerken vermieden.
- durch die Unterbringung besonders leichter Gleit- oder Laufschienen in den oben offenen Laufschienenträgern, die hier berührungsgeschützt und gar wassergekühlt sind.
- durch die Unterbringung von Versorgungsleitungen und -kabeln sowie der die längsbewegte Versorgung ermöglichenden Kabel- und Schlauchraupen in den oben offenen Schienenträgern, die ebenfalls hier geschützt und eventuell wassergekühlt liegen.
- durch die Ausführung der Brennschneidmaschine auf einer besonders dünnen Grundplatte aufbauend, die nur die nötigsten Bauteile wie Schneidantrieb mit Schneidbrenner und Anklemmhebel mit Klemmzylinder unter einer leichten abnehmbaren oder hochklappbaren Haube trägt, wozu die Grundplatte durch Verbindung mit einer unter der Maschine angeordneten, ansonsten eigenständigen, aber hochfesten Wasserkühlplatte zunehmend versteift ist.
- durch die Ausführung der Brennschneidmaschine mit einem nur eine Laufbahn (=ein Schienenträger mit 2 Schienen) umschließenden zu Montage- oder Wartungszwecken teilbaren Rahmen.
- durch die direkte Anbringung der mindestens 3 Gleitkufen oder 3 Laufrollen oder 3 Kugellager als Laufrollen in oder an einfachsten Lagerwinkeln an über die Gleit- oder Laufschienen in den Schienenträgern ragenden lappenartigen Erweiterungen der Grundplatte oder im Hauben- oder Wannenteil der umschließenden Maschine.
- durch die ortsfeste (außerhalb der Brennschneidmaschine) Anbringung des motorischen Verfahrantriebes am Ende über einer auch als Führung dienenden Laufschiene mit Motor, Getriebe, Kupplung und Bremse. Dieser Antrieb wirkt über einen am anderen Ende der Laufschiene umgelenkten Seil- oder Kettenzug auf die Brennschneidmaschine. Dessen Enden sind über den Führungsschienen an der Grundplatte oder am Rahmen befestigt.
- dadurch daß der oder die elektronischen Stellungsgeber für die Brennschneidmaschinenposition am Verfahrantrieb (Drehgeber, Impulsgeber) oder an dem Zugelement wie Kette oder Seil desselben zumindest zum Teil (Endschalternocken) angebracht sind.
- dadurch daß die Gassteuerung
   a) in einen Absperr- und Feinregelteil aufgebaut auf die Grundplatte oder in den Rahmen zum brennernahen, sparsamen, ferngesteuerten Absperren nach dem Schneiden und zum Feineinstellen der Gase je nach speziellem Maschinenzuführungsverlust und
   b) in einen Hauptabsperr-, Druckminderer- (Druckregler-) und Verteilerteil ortsfest angebaut an dem Portalgerüst aufgeteilt sind.

Die Erfindung der nachstehend beschriebenen Trenneinrichtung einer Stranggießanlage war möglich, indem die Wasserkühlung von Trenneinrichtung und Laufbahn unter Verwendung einfachster d.h. wirtschaftlichster Trägerformen bewirkt werden sollte. Zwei nach oben offene möglichst breite U-Träger wurden als Kühlwasserrücklauf und Maschinenlaufbahn bestimmt und daraus folgend das Bodenteil des Maschinenkastens der Trenneinrichtung als flachgelegter hoher Parallelflanschträger mit vor- und darunter geschweißten Blechen. Da Wasser als Kühlwasser offen in den Laufbahnen zurückgeleitet wird, führte seine auftreibende und gleitende Wirkung zuerst zum Gedanken, eine schwimmende, zumindest jedoch gleitende oder teilweise Trenneinrichtung zu bauen, ihren Verfahrantrieb gewichtssparend nach draußen über die Laufbahnen zu verlegen. Um die Gleitwirkung zu verbessern, läßt sich eine einfache, glatte, vielleicht stegartige Gleitschiene z. B. aus Edelstahl mit Oberkante unter Kühlwasserspiegel einlegen, der auch mit Wasser als Schmiermittel besonders günstigen Reibwert ergebende Gleitstücke entsprechen. Eine Reinigungswirkung des fließenden Kühlwassers ergibt zusätzliche Vorteile, wenn man die Korrosion entsprechender Bauteile verhindern kann.

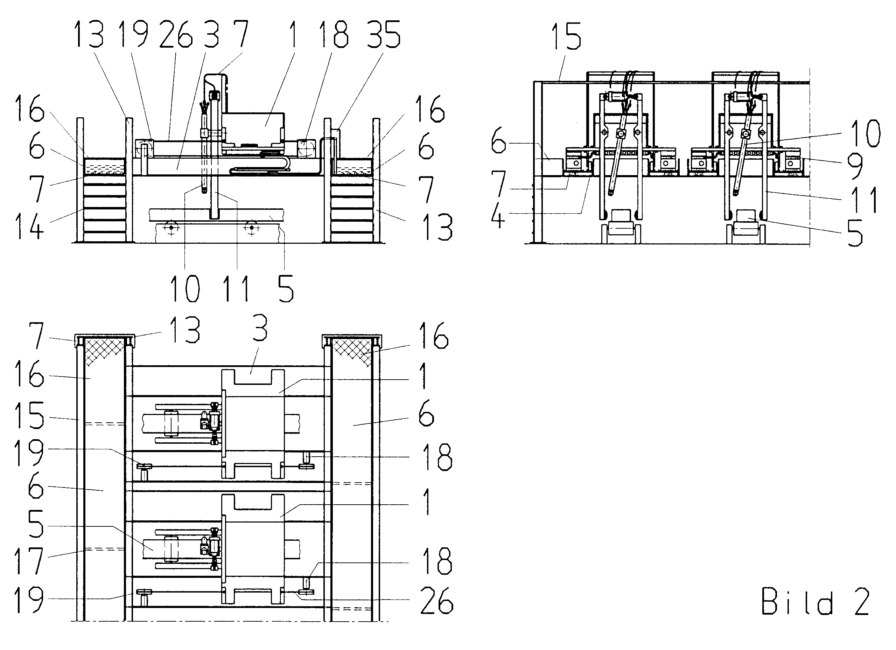

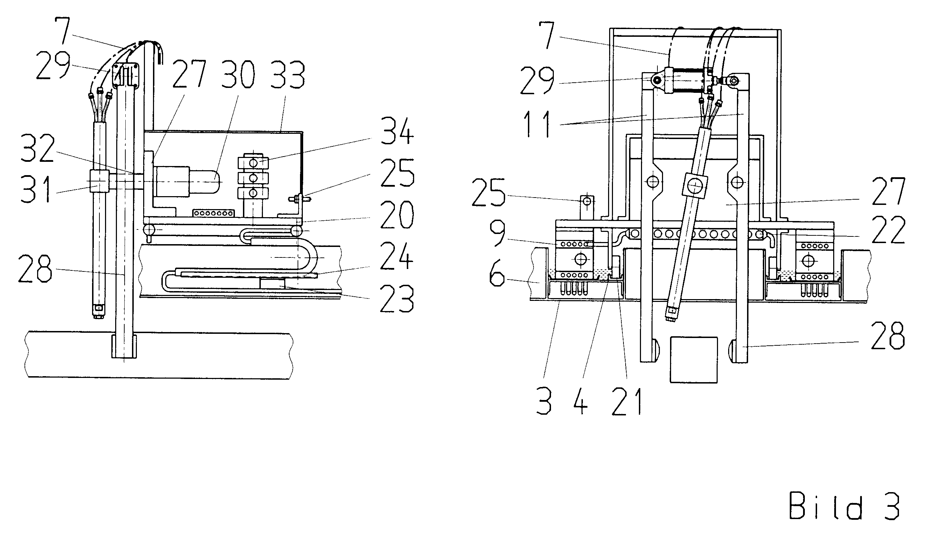

Nachfolgend wird der erfindungsgemäße, in Bild 2 bespielsweise dargestellte Strangbrennschneidbereich beschrieben:
Zwei Portalträger 6 aus nach oben offenem U- oder H-Profil über den Strängen 5 werden von acht Stützen 13 aus U-Profil getragen. Diese Stützen 13 sind durch Sprossen 14 zu Leitern ergänzt und dienen als Führungskanäle für aufsteigende/fallende Versorgungsleitungen 7. An ihrem oberen Ende sind die Stützen 13 mit Rohren als Geländer 15 verbunden. Die wassergefüllten und Versorgungsleitungen 7 tragenden Portalträger 6 sind mit Gehblechen 16 (Gitterrosten) abgedeckt und im Innern mit den Wasserfluß bestimmenden Schottblechen 17 versehen.

Zwischen diesen Portalträgern 6 sind die Laufschienenträger 3 mit nach oben offenem U-Profil befestigt. Der Wasserfluß in den Portalträgern 6 ist mit dem in diesen Laufschienenträgern 3 so verbunden, daß, woher auch immer das Kühlwasser kommt, durch Zuflußrohre oder -Bohrungen ein Kühlwasserumlauf mit bestimmtem Wasserstand entsteht. In den wasserdurchflossenen Portalträgern 6 sind Versorgungsleitungen 7 geschützt angeordnet, und in den Laufschienenträgern 3 auch die Leitungsraupen 9 für die Bewegung der Brennschneidmaschinen 1. Am Ausgangsende für die Brennschneidmaschine tragen Laufschienenträger 3 oder auch die Portalträger 6 die ortsfesten Verfahrantriebe 18. Am entgegengesetzten Ende sind die Umlenkrollen 19 angebracht, mit denen die Brennschneidmaschine 1 mittels Zugseil 26 (befestigt an der Brennschneidmaschine 1) auf den Lauf- und Führungsschienen 4 bedarfsweise oder nach Schnittende verfahren werden kann.

Der Kühlwasserzufluß für die Portalträger 6 und die Laufschienenträger 3 kommt entweder vom Rückfluß des Brennerkühlwassers, des Maschinenkühlwassers, von einer eigens dafür vorgesehenen Kühlwasserleitung oder aus einer beliebigen Zusammenfassung derselben.

Die Brennschneidmaschine 1 selbst in den Bildern 2 und 3 besteht aus einer Grundplatte 20, die über den Laufschienenträger 3 zur Befestigung der Gleitkufen oder Rollen 21 an mindestens drei Stellen nach außen erweitert ist und an denen auch die beweglichen Enden der Leitungsraupen 9 angebracht sind. Die korrosionsunempfindlichen Gleitkufen/Rollen 21 laufen, zwei davon mit weitem Abstand, in einer engen Lauf- und Führungsschiene 4 im Laufschienenträger 3 unter dem Verfahrantrieb 18, und mindestens eine Rolle 21 auf der anderen Seite auf einer weiten Laufschiene 4, um Verklemmungen zu vermeiden. Das Kühlwasser in den Laufschienenträgern 3 bzw. an den Laufschienen 4 dient auch als Schmierung für Gleitkufen bzw. Rollen 21.

Unter der Grundplatte 20 ist eine neuartige Wärmeschutzplatte 22 mit bestmöglichem Wasserfluß bei niedrigsten Fertigungskosten und höchster Festigkeit an mindestens fünf Stellen durch Schweißen oder Schrauben angebracht, um die leichte Grundplatte zu versteifen. Näheres über diese Wärmeschutzplatte 22 und ihre Ausführung folgt später.

In den Laufschienenträgern 3 sind abgewinkelte Stege 23 eingelegt, auf denen die Wannen 24 für die Leitungsraupen 9 neben den Laufschienen 4 ruhen. In Flucht hintereinander etwa über der Lauf- und Führungsschiene 4 sind auf den Erweiterungen der Grundplatte 20 zwei Halteböcke 25 zur Befestigung des Zugseiles 26 angeschraubt.

Am vorderen Ende auf der Grundplatte befindet sich ein Lagerschild 27 zur Aufnahme der Drehlager für die Anklemmung 11, die aus zwei Anklemmhebeln 28, einem sie betätigenden Preßluftzylinder 29 und den erforderlichen Versorgungsleitungen 7 besteht. Mehr oder weniger mittig sitzt an diesem Lagerschild 27 auch der Schneidantrieb 30 mit der durch das Lagerschild 27 gehenden und den Brennerhalter 31 tragenden Brennerwelle 32.

Unter der leichten, abnehmbaren oder hochklappbaren Maschinenhaube 33 sitzt auf der Grundplatte 20 auch eine Absperr- und Feinregel-Versorgungseinrichtung 34, zu der vorwiegend die Betriebsmittel für den Schneidbrenner 10 wie Schneidsauerstoff, Heizsauerstoff und Brenngas fließen, die bereits in der ortsfesten Hauptabsperr- und Druckmindereinrichtung 35 auf dem Portalträger 6 auf die richtigen Arbeitsdrücke gebracht wurden. Das Absperren der Betriebsmittel nach jedem Schnitt in Brennernähe erspart wesentliche Gasverluste. Eine genaueste düsenspezifische Flammeneinstellung ist an der Maschine schnell und genau durchzuführen. Eine selbstregelnde, Düsenverschleiß oder Düsenverstopfung zum Teil ausgleichende Anordnung von Blenden ist nur hier in Brennernähe möglich, wie auch die Abzweigung von Heizsauerstoff und Brenngas für eine auch aus Sicherheitsgründen ständig brennende Zündflamme nur hier sinnvoll und wirtschaftlich durchzuführen ist.

Die vorstehend erwähnte, neuartige Wärmeschutzplatte 22 zum wirksamen Wärmeschutz gegen die vom Strang ausgehende Wärme muß eine Reihe von wesentlichen Voraussetzungen zur sinnvollen Ergänzung einer leichten Brennschneidmaschine 1 erfüllen:
a) Eigenfestigkeit bzw. steifigkeit zur Versteifung der dünnen und damit leichten Grundplatte
b) hohe und gleichmäßige Kühlwasserdurchflußgeschwindigkeit zur sicheren, gleichmäßigen Kühlung ohne stellenweise isolierende Dampfblasenbildung
c) einfachste und preiswerte Herstellung vorwiegend aus Rundrohr.

Bekannt sind hin und her gehende Rohrschlangen mit aufgelegten oder daruntergehängten Blechen zur Lückenabdeckung, nur gut für den Fall b. Des weiteren aneinander geschweißte Vierkantrohre mit eingeschweißtem Enddeckel und in diesem verbindend eingeschweißte Rohrbogen, nur gut für den Fall a.
Doppelblechwärmeschutzplatten, randgeschweißt mit eingeschweißten Bolzen zur Beulungsverminderung, weder für Fall a, b noch c besonders geeignet.

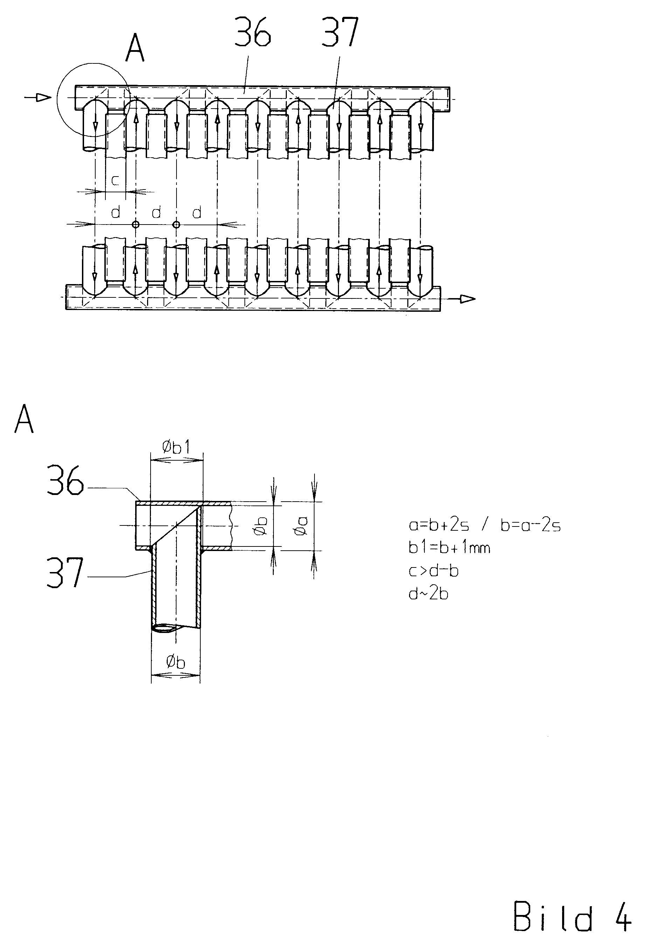

Nach Bild 4 besteht eine steife, leichte und preiswert herstellbare Wärmeschutzplatte 22 mit gutem Wasserdurchfluß aus zwei Randrohren 36, die bei bestimmtem Außendurchmesser und Wandstärke in Reihe regelmäßig mit gewähltem Abstand mit ihrem Innendurchmesser entsprechenden, einseitigen Bohrungen versehen sind. Zwischen zwei Randrohren 36 werden beliebig viele und beliebig lange Kühlrohre 37 mit einem Außendurchmesser geringfügig kleiner als die Bohrungen bzw. der Innendurchmesser der Randrohre 36 eingesteckt und eingeschweißt. Vor dem Einschweißen wurden die Kühlrohre 37 immer unter 45° fortlaufend ab- bzw. zugeschnitten, so daß sie beim Einstecken in die Randrohre abwechselnd paarig sich einmal offen und einmal geschlossen gegeneinander zeigen und somit einen einwandfreien Durchfluß erzwingen, der durch die ähnlichen Innendurchmesser von Randrohren 36 und Kühlrohren 37 immer etwa gleich schnell ist. Die Totwasserräume in den Randrohren 36 zwischen den sich paarig gegeneinander geschlossen zeigenden Kühlrohren 37 füllen sich durch die Fertigungsspalten mit Wasser und ergeben durch die benachbarte Kühlung keine Schwierigkeiten.

In die durch die erforderlichen Schweißabstände sich ergebenden Lücken zwischen den Kühlrohren 37 werden auf der Unterseite einfache Flacheisen 38 eingeheftet, die Vertiefungen über ihnen und zwischen den Kühlrohren werden mit hitzebeständigen und isolierendem Material, z. B. Schamotte ausgefüllt.

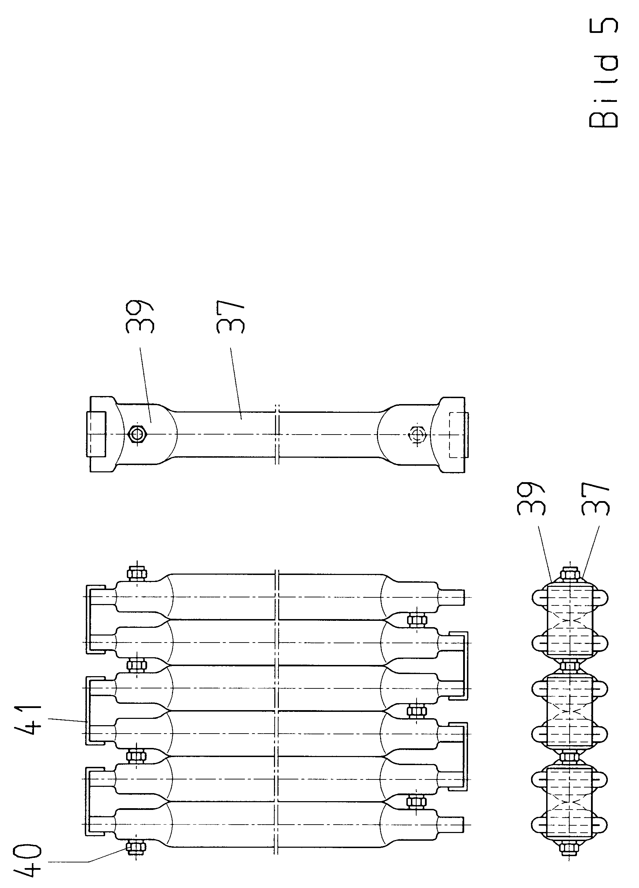

Im Fall der erwünschten Zerlegbarkeit einer Wärmeschutzplatte 22 ist eine solche in neuartiger Ausführung gemäß Bild 5 erzeugt.
Kühlrohre 37 werden an ihren Enden zweimal zusammengepreßt: einmal zur Erzeugung einer ausreichend großen und ebenen Bohrfläche 39 und ganz am Ende dann noch einmal zum Verschließen des Rohrendes, gegebenenfalls nach Einlegen eines Dichtmaterialstreifens. Danach wird wechselseitig in die Bohrflächen 39 eine Gewindebohrung eingearbeitet. Durch das Einschrauben von mit Dichtringen versehenen, sowohl mit Rechtsgewinde als auch mit Linksgewinde versehenen Durchgangsnippeln 40 sind je zwei Kühlrohre 37 für Kühlwasser durchgängig verbunden. Mit dem jeweils nächsten Durchgangsnippel 40 wird die andere Seite eines dieser Kühlrohre 37 mit einem anderen verschraubt, dessen andere Seite mit dem nächsten.

Durch Klammern 41 über die jeweils nicht verschraubten Enden zweier benachbarter Kühlrohre wird die Festigkeit der ganzen Wärmeschutzplatte 22 verbessert. Mehr oder weniger lange Schweißungen zwischen den Kühlrohren 37 dienen dem gleichen Zweck. Aber es ist auch möglich, die zusammengeschraubte Wärmeschutzplatte 22 in längslaufende U-Profile an beiden Enden oder ähnlich zu spannen.

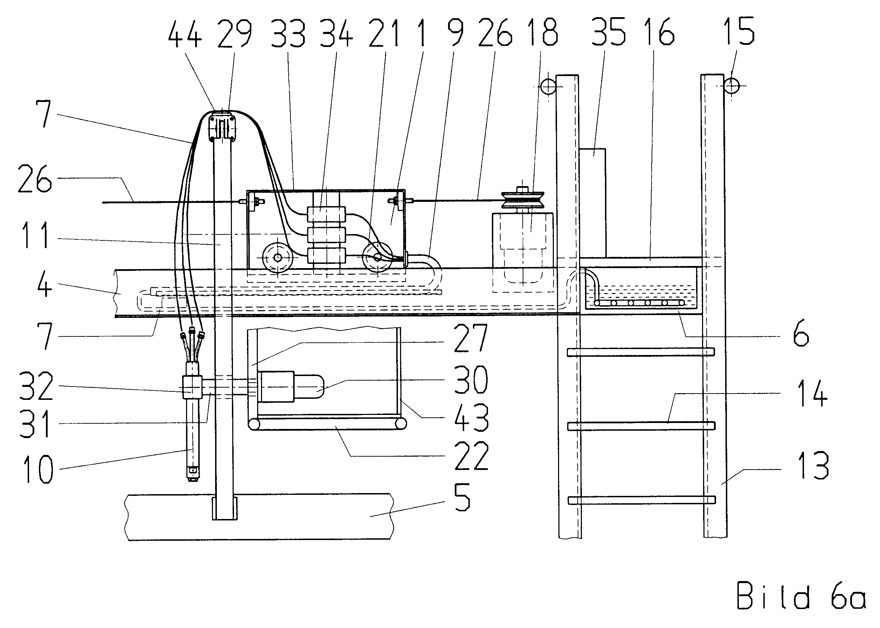

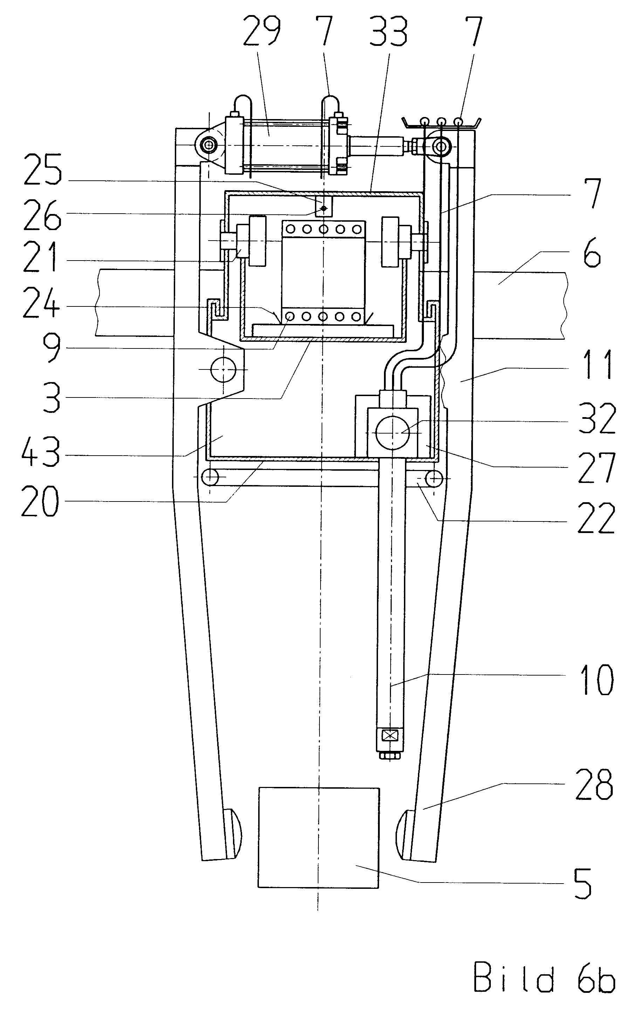

Ein anderes Beispiel einer leichten Strangbrennschneidmaschine 1 in einer Stranggießanlage gemäß den erfindungsgemäßen Ansprüchen ist in Bild 6a bzw. 6b dargestellt und wird hiermit wie folgt beschrieben:
Über dem Strang 5 ist die Brennschneidmaschine 1 an nur einem wie zuvor beschriebenen, bekannten Laufschienenträger 3 angeordnet, der von Wasser durchflossen gekühlt wird und Versorgungsleitungen 7 sowie die Leitungsraupe 9 trägt. Die Maschinenhaube 33 ist hier stabiler und den Laufschienenträger 3 umfassend ausgeführt. Sie trägt 3 bzw. 4 Gleitschuhe/Rollen 21, die auf den beiden nach oben zeigenden Flanschen des Laufschienenträgers 3 bzw. an 2 nicht dargestellten leichten Profilen in dem Laufschienenträger 3 im oder über dem Kühlwasser laufen. Unterhalb der Lager für die Gleitschuhe/Rollen 21 ist die Maschinenhaube 33 mit seitlichen Flanschen zum Anbringen einer Maschinenwanne 43 durch Einschieben oder Anschrauben versehen. An den Maschinenhauben 33 sind die beiden Halteböcke 25 für das Zugseil 26 des Verfahrantriebes 18 angebracht. Der Rücktrum des Zugseiles 26 geht, um den Antriebsrad- oder Umlenkrollendurchmesser versetzt, durch die Stirnwände der tragenden Maschinenhaube 33.

In der an der Maschinenhaube 33 angehängten Maschinenwanne 43, die mit der letzteren zusammen den Laufschienenträger 3 umschließt, sind auf der leichten Grundplatte 20 oder an dem vorderen Lagerschild 27 wie bekannt die Lager für die Anklemmhebel 28 der Anklemmung 11 und die Brennerwelle 32 bzw. der Schneidantrieb 30 angebracht. In der Maschinenwanne 43 könnte ein offener Kühlwasserfluß sein, jedoch ist die stützend ergänzende und schützende Anordnung einer Wärmeschutzplatte 22 darunter als besser vorgesehen.

So wie auch der Verfahrantrieb 18 über dem nur noch einen, offenen Laufschienenträger 3 angeordnet ist, sind auch Portalträger 6 mit Schottblechen 17, Gehblechen 16, Geländer 15, Hauptabsperr- und Feinregelversorgungseinrichtung 35 in der Brennschneidmaschine wie schon beschrieben ausgeführt.

Neu ist allerdings noch die seitliche Anordnung des Schneidbrenners 10 neben dem Laufschienenträger 3, der aus einer nahezu senkrechten Lage zum Anschnitt hin und beim Schneiden über den Strang 5 in eine schrägere Stellung als bisher bekannt dreht. Abgesehen von einer entsprechenden Länge des Schneidbrenners 10 sind die Anschlüsse für die Versorgungsleitungen 7 nach außen hin abgebogen und diese Versorgungsleitungen können von einer Auflage 44 auf einem Anklemmhebel 28 herabhängen.
Da beim Brennschneiden der Schnittbeginn zumeist von unten her beginnt und dafür eine leicht schräge Anstellung des Schneidbrenners 10 eine bessere Anschneidbeheizung erbringt und dazu das Ausschneiden beim Schnittende erst unten dann oben am Strang sicherer erfolgt, sind keine Nachteile durch den von der Mitte wegversetzten Schneidbrenner 10 zu erwarten.

Vorteilhaft ist auch eine senkrecht über dem Strang liegende Drehachse des Schneidbrenners 10, vor allem wenn auch die beiden Anklemmhebel um diese gleiche Drehachse beim Anklemmen bewegt werden. Damit sind Anklemmbewegung und Schneidbewegung gleich und eine einfache, genaueste Kantentastung zum Anschneiden ist möglich.

Nachzutragen wäre nur noch die konstruktive Aufgabe der Reinhaltung der nach oben offenen Träger und des durch sie fließenden Kühlwassers gegen Schlackespritzer und Staub. Nicht von der Brennschneidmaschine überfahrene Bereiche können fest abgedeckt werden, zum Teil auch durch seitlich an dem Laufschienenträger 3 aufgehängte Teilabdeckungsbleche. Ausreichend hohe Kühlwassergeschwindigkeit und Absetzbereiche für den Schlamm an zugänglichen Stellen sollten für eine ausreichende Reinhaltung genügen.

### Legende

- 1: Brennschneidmaschine
- 2: Laufrad
- 3: Laufschienenträger
- 4: Laufschienen
- 5: Strang
- 6: Portalträger
- 7: Versorgungsleitungen
- 8: Ausleger
- 9: Leitungsraupe
- 10: Schneidbrenner
- 11: Anklemmung
- 12: Gasesteuerstation
- 13: Stützen
- 14: Sprossen
- 15: Geländer
- 16: Gehbleche
- 17: Schottbleche
- 18: Verfahrantrieb
- 19: Umlenkrolle
- 20: Grundplatte
- 21: Gleitkufe/Rolle
- 22: Wärmeschutzplatte
- 23: Stege
- 24: Wanne
- 25: Halteböcke
- 26: Zugseil
- 27: Lagerschild
- 28: Anklemmhebel
- 29: Preßluftzylinder
- 30: Schneidantrieb
- 31: Brennerhalter
- 32: Brennerwelle
- 33: Maschinenhaube
- 34: Absperr- und Feinregel-Versorgungseinrichtung
- 35: Hauptabsperr- und Druckmindereinrichtung
- 36: Randrohre
- 37: Kühlrohre
- 38: Flacheisen
- 39: Bohrfläche
- 40: Durchgangsnippel
- 41: Klammer
- 42: Flansch
- 43: Maschinenwanne

## Patentansprüche

1. Stranggießmaschine mit leichter und robuster Strangbrennschneidmaschine dadurch gekennzeichnet, daß auf einem wasserdurchflossenen Laufbahn- und Versorgungsgerüst aus nach oben offenen Stahlprofilen eine Brennschneidmaschine auf einer Laufbahn aus einem oder zwei mit Schienen bestückten, offenen und wasserdurchflossenen Schienenträgern verfährt, die im wesentlichen aus dünner Grundplatte mit stützender Wasserrohrplatte, tragender Frontplatte und aufgesetzter Schutzhaube, oder aus einem die Laufbahn umschließenden, verschiebbarem, teilbarem Maschinenrahmen aus gekanteten oder zusammengeschweißten dünnen Platten mit tragenden Frontplatten und untergehängter, stützender Wasserrohrplatte besteht, die mit herkömmlicher Anklemmung, Schneidantrieb, Schneidbrenner, mit Gleitkufen oder Rollen für den Betrieb im Wasser und mit einer neuartigen, absperrenden und feinregelnden Versorgungseinrichtung in der Brennschneidmaschine ausgestattet sind.
Versorgungsleitungen sowie Schlauch- und Kabelraupen liegen bzw. verfahren im Wasser des oder der Schienenträger. Der aus Motor und Getriebe bestehende Verfahrantrieb der Brennschneidmaschine ist einseitig auf der einen Seite über einem Schienenträger angeordnet, die zugehörige Umlenkrolle an der anderen. Das Zugseil greift an der Grundplatte der Maschine oder dem die Gleitkufen oder Rollen tragenden und geführten Teil der Brennschneidmaschine über einem oder dem Schienenträger an. Das Leertrum des Zugseils läuft ebenfalls darüber geschützt zurück, gegebenenfalls durch den Haubenteil hindurch.

2. Stranggießmaschine mit leichter und robuster Strangbrennschneidmaschine für kleine und mittlere Strangabmessungen nach Anspruch 1, dadurch gekennzeichnet, daß Laufbahn und Versorgungsgerüst aus längsangeordneten, nach oben offenen U-bzw. Doppel-T-Trägern zur Schienenaufnahme und aus diese tragende, quer angeordnete, größere, ebenso nach oben offenen U-bzw. Doppel-T-Trägern besteht, dessen waagerechte, offene Teile mit Führungs- und Staubblechen für Wasserstandsregulierung ausgestattet von Kühlwasser durchflossen sind und auch als Rückfluß für das Maschinen- oder Brennerkühlwasser dienen können. Rohrleitungen und Kabel liegen geschützt im Kühlwasser. Lose oder leicht austauschbar an die Träger an- oder darunter gehängte Bleche dienen als Strahlungsschutz. Aufgelegte Bleche oder Roste und seitlich hochstehende Geländer erlauben zumindest die Querbegehbarkeit.

3. Stranggießmaschine mit leichter und robuster Strangbrennschneidmaschine für kleine und mittlere Strangabmessungen nach einem der Ansprüche 1-2, dadurch gekennzeichnet, daß die Wasserrohrplatte aus einer Reihe von an ihren Enden unter etwa 45° zugeschnittenen Kühlrohren besteht, die wechselnd in zwei außenliegende, mit kühlrohrdurchmessergroßen Bohrungen versehene Randrohre gesteckt und dicht verschweißt sind, so daß die Kühlrohre eines nach dem anderen durchflossen werden. Zwischen die Kühlrohre sind Blechstreifen eingeheftet und Isolierwerkstoffe eingefüllt.

4. Stranggießmaschine mit leichter und robuster Strangbrennschneidmaschine für kleine und mittlere Strangabmessungen nach einem der Ansprüche 1-3, dadurch gekennzeichnet, daß die absperrende und feinregelnde Versorgungseinrichtung aus einem Ventilkörper mit von einem aufgesetzten Magneten betätigter Absperrmembrane, mit nachgeordnet eingebautem Nadelventil, mit nachgeordnet aufgesetztem Manometer vor dem Ausgang und vorgeschaltetem, eingangsseitig eingebautem, mit nadelventilversehenem Abzweig für geringe Mengen, besteht.

5. Stranggießmaschine mit leichter und robuster Strangbrennschneidmaschine für kleine und mittlere Strangabmessungen nach einem der Ansprüche 1-4, dadurch gekennzeichnet, daß die Wärmeschutzplatte aus einer Reihe von an ihren Enden einstufig oder zweistufig zusammengedrückten, gerade abgeschnittenen Kühlrohren besteht, an denen die jeweils äußere Verformung mit einem eingelegten Dichtmaterial als Rohrverschluß dient, die jeweils innere als Fläche eines hier teilweise flachen Rohres zum Anbringen einer wechselseitigen Gewindebohrung. Mittels Durchgangsnippel mit je einmal Links- und einmal Rechtsgewinde und Dichtringen sind die Kühlrohre wechselseitig, einen Kühlwasserdurchfluß ermöglichend, zusammengeschraubt.

6. Stranggießmaschine mit leichter und robuster Strangbrennschneidmaschine für kleine und mittlere Strangabmessungen nach einem der Ansprüche 1-5, dadurch gekennzeichnet, daß die dünne Grundplatte an mindestens 5 auf die Fläche verteilten Punkten mit der darunter angeordneten Wärmeschutzplatte zur Versteifung fest verbunden ist, und daß an mindestens drei am Rande und auf beiden Seiten über den Laufschienen liegend, je eine auf oder in der Schiene gleitende Kufe aus in Wasser besonders gleitfähigem Material, oder eine wasserunempfindliche gleit- oder kugelgelagerte Laufrolle, oder gar nur Kugellager als Laufrolle angebracht sind, von denen zwei hintereinander angeordnet zur Führung an der Schiene vorgesehen sind.

7. Stranggießmaschine mit leichter und robuster Strangbrennschneidmaschine für kleine und mittlere Strangabmessungen nach einem der Ansprüche 1-6, dadurch gekennzeichnet, daß festverlegte Rohrleitungen und Kabel wärme- und schlackespritzergeschützt in den offenen wasserdurchflossenen Quer- und Längsträgern liegen, im Verfahrbereich der Brennschneidmaschine in ebenfalls in diesen liegenden, an der Grundplatte angekuppelten Schlauch- bzw. Kabelraupen als bewegliche Kabel und Schläuche weitergehen, und über der Grundplatte geschützt zu den Geräten der Maschine geführt sind.

8. Stranggießmaschine mit leichter und robuster Strangbrennschneidmaschine für kleine und mittlere Strangabmessungen nach einem der Ansprüche 1-7, dadurch gekennzeichnet, daß ein Seilzugantrieb mit Umlenkung über einer Schiene - und zwar der für die Führung vorgesehenen - angeordnet ist, so daß der Antrieb mit Motor, Getriebe, Kupplung, Bremse und Seilumlenkrolle bzw. Kettenumlenkrad nahe oder auf einem begehbaren Querträger sitzt. Die beiden Zugseilenden (Kettenenden) sind über der Führungsschiene an der Grundplatte oder dem tragenden Teil des Maschinenrahmens, also dem mit Gleitkufe oder Rolle versehenen, befestigt.
